# EUROPEAN PATENT APPLICATION

(11) **EP 4 580 242 A1**
(43) Date of publication of application: **02.07.2025**
(21) Application number: 23867073.1
(22) Date of filing: 30.06.2023
(51) Int. Cl.: H04W 24/02

(54) **METHOD AND APPARATUS FOR ESTABLISHING QOS RULE**

(30) Priority: 22.09.2022 CN 202211160985
(71) Applicant: Huawei Technologies Co., Ltd., Shenzhen, Guangdong 518129 (CN)
(72) Inventor: HU, Xiang, Shenzhen, Guangdong 518129 (CN); CHEN, Xiao, Shenzhen, Guangdong 518129 (CN); DENG, Rui, Shenzhen, Guangdong 518129 (CN)
(74) Representative: Goddar, Heinz J.
(86) International application number: PCT/CN2023/104998
(87) International publication number: WO 2024/060778

(57) **Abstract**

A method and an apparatus for establishing a QoS rule are provided. The method includes: A user plane network element obtains first indication information, where the first indication information indicates to trigger, when a first service occurs, establishment of a QoS rule of a QoS flow corresponding to the first service. When the first service meets a first condition, the user plane network element sends flow description information of the first service and an identifier of a first rule to a session management network element, where the first rule corresponds to the first indication information, and the first rule is used to establish the QoS rule. According to the foregoing method, the user plane network element triggers a creation procedure or an update procedure of the QoS flow corresponding to the first service based on the first indication information, and further establishes the QoS rule of the QoS flow corresponding to the first service. A signaling storm can be avoided by determining whether the first service meets the first condition. Therefore, the establishment of the QoS rule of the QoS flow corresponding to the first service is effectively triggered, and actual service experience can be improved.

## Description

### CROSS REFERENCE TO RELATED APPLICATION

This application claims priority to Chinese Patent Application No. 202211160985.5, filed with the China National Intellectual Property Administration on September 22, 2022 and entitled "METHOD AND APPARATUS FOR ESTABLISHING QOS RULE", which is incorporated herein by reference in its entirety.

### TECHNICAL FIELD

This application relates to the field of communication technologies, and in particular, to a method and an apparatus for establishing a QoS rule.

### BACKGROUND

In a 5th generation (5th generation, 5G) mobile communication technology system, a core network device may trigger a creation procedure or an update procedure of a quality of service (quality of service, QoS) flow by using an awareness capability of a service, to establish a QoS rule of the QoS flow corresponding to the service.

In this case, the core network device needs to perform awareness and matching on a flow-by-flow basis. However, if there are a large quantity of concurrent service flows of a service, the core network device (for example, a user plane network element) frequently initiates the creation procedure or the update procedure of the QoS flow, to respectively establish QoS rules for the concurrent service flows. Consequently, a signaling storm may be caused.

For example, hundreds of service flows are often generated concurrently in a short time period for a peer-to-peer (peer-to-peer, P2P) service, and a survival period of each service flow is very short. If the core network device establishes corresponding QoS rules for the hundreds of service flows of the P2P service, a severe signaling storm may be caused. In addition, because the survival period of each service flow is very short, and the creation procedure or the update procedure that is of the QoS flow and that is used to establish the QoS rule is time-consuming, even if a corresponding QoS rule is established for each service flow, actual experience of the service may not be improved.

Therefore, how to effectively trigger establishment of the QoS rule is an urgent problem to be resolved.

### SUMMARY

Embodiments of this application provide a method and an apparatus for establishing a QoS rule, to effectively trigger establishment of the QoS rule.

According to a first aspect, this application provides a method for establishing a quality of service QoS rule. The method includes:

A user plane network element obtains first indication information. The first indication information indicates to trigger, when a first service occurs, establishment of a QoS rule of a QoS flow corresponding to the first service. When the first service meets a first condition, the user plane network element sends flow description information of the first service and an identifier of a first rule to a session management network element. The first rule corresponds to the first indication information. The first rule is used to establish the QoS rule.

According to the foregoing method, the user plane network element triggers a creation procedure or an update procedure of the QoS flow corresponding to the first service based on the first indication information, and further establishes the QoS rule of the QoS flow corresponding to the first service. A signaling storm can be avoided by determining whether the first service meets the first condition. Therefore, the establishment of the QoS rule of the QoS flow corresponding to the first service is effectively triggered, and actual service experience can be improved.

In a possible implementation, when the user plane network element obtains the first indication information, the user plane network element obtains the first indication information and the first condition.

In a possible implementation, when the user plane network element obtains the first indication information and the first condition, the user plane network element receives the first rule and a second rule from the session management network element. The first rule includes the first indication information. The second rule includes the first condition.

In the foregoing implementation, the user plane network element may obtain the first indication information by using the first rule, and obtain the first condition by using the second rule.

In a possible implementation, the user plane network element obtains a plurality of predefined rules. When the user plane network element obtains the first indication information and the first condition, the user plane network element receives a second rule from the session management network element. The second rule includes a name of a first predefined rule. The first predefined rule is one of the plurality of predefined rules. The first predefined rule includes the first rule and the first condition. The first rule includes the first indication information. The user plane network element determines the first predefined rule from the plurality of predefined rules based on the name of the first predefined rule.

In the foregoing implementation, the user plane network element preconfigures the plurality of predefined rules, and may obtain the first indication information and the first condition based on the name that is of the first predefined rule and that is included in the second rule.

In a possible implementation, when the user plane network element obtains the first indication information and the first condition, the user plane network element receives the first rule and a second rule from the session management network element. The first rule includes an application detection and control event subscription information element. The application detection and control event subscription information element indicates the first indication information. The second rule includes the first condition.

In the foregoing implementation, the user plane network element may implement a function of the first indication information by reusing the application detection and control event subscription information element, and obtain the first condition by using the second rule.

In a possible implementation, the first rule is a usage reporting rule, and the second rule is a packet detection rule.

In a possible implementation, when the first service meets the first condition, the user plane network element sends first event information to the session management network element. The first event information indicates that the first service starts.

In a possible implementation, the first indication information indicates to trigger, when the first service stops, deletion of the QoS rule. When the first service stops, the user plane network element sends the flow description information of the first service, the identifier of the first rule, and second event information to the session management network element. The second event information indicates that the first service stops, and the flow description information of the first service and the first rule are used to determine the QoS rule.

In the foregoing implementation, the user plane network element may trigger, based on the first indication information when the first service stops, deletion of the QoS rule.

In a possible implementation, the first condition includes that service duration is greater than or equal to a duration threshold, and/or a service transmission rate is greater than or equal to a transmission rate threshold.

In a possible implementation, the flow description information of the first service includes 5-tuple information of the first service.

In a possible implementation, the user plane network element further obtains first information. The first information is used to determine the first service, and the first information includes an application identifier of the first service and/or the service flow description information of the first service.

According to a second aspect, this application provides a method for establishing a quality of service QoS rule. The method includes:

A session management network element receives flow description information of a first service and an identifier of a first rule from a user plane network element. The session management network element determines corresponding QoS information based on the identifier of the first rule. The session management network element establishes a QoS rule of a QoS flow corresponding to the first service based on the QoS information and the flow description information of the first service.

In the foregoing implementation, the session management network element may determine the corresponding QoS information based on the identifier of the first rule, and establish the QoS rule of the QoS flow corresponding to the first service based on the QoS information and the flow description information of the first service, to effectively trigger establishment of the QoS rule of the QoS flow corresponding to the first service and improve actual service experience.

In a possible implementation, the session management network element receives first event information from the user plane network element. The first event information indicates that the first service starts. When the session management network element establishes the QoS rule of the QoS flow corresponding to the first service based on the QoS information and the flow description information of the first service, the session management network element establishes the QoS rule of the QoS flow corresponding to the first service based on the QoS information, the flow description information of the first service, and the first event information.

In a possible implementation, the session management network element receives a policy and charging control rule from a policy control network element. The policy and charging control rule includes first indication information and a first condition. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold. The session management network element determines the first rule and a second rule according to the policy and charging control rule. The first rule includes the first indication information. The second rule includes the first condition. The session management network element sends the first rule and the second rule to the user plane network element.

In the foregoing implementation, the session management network element may map the policy and charging control rule from the policy control network element to the first rule and the second rule, and send the first rule and the second rule to the user plane network element.

In a possible implementation, the session management network element receives a name of a first predefined rule from a policy control network element. The session management network element sends a second rule to the user plane network element. The second rule includes the name of the first predefined rule. The first predefined rule is one of a plurality of predefined rules obtained by the user plane network element. The first predefined rule includes the first rule and a first condition. The first rule includes first indication information. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold.

In the foregoing implementation, the session management network element may map first predefined rule of the policy and charging control rule from the policy control network element to the second rule, and send the second rule to the user plane network element.

In a possible implementation, the first rule is a usage reporting rule, and the second rule is a packet detection rule.

In a possible implementation, the first indication information indicates to trigger, when the first service stops, deletion of the QoS rule. The session management network element receives the flow description information of the first service, the identifier of the first rule, and second event information from the user plane network element. The second event information indicates that the first service stops. The session management network element determines the QoS rule based on the identifier of the first rule and the flow description information of the first service. The session management network element deletes the QoS rule based on the second event information.

In the foregoing implementation, the session management network element may trigger, based on the flow description information of the first service, the identifier of the first rule, and the second event information that are reported by the user plane network element, deletion of the QoS rule when the first service stops.

According to a third aspect, an embodiment of this application provides a communication apparatus. The communication apparatus may be the user plane network element in the first aspect. The communication apparatus has a function of the foregoing user plane network element. The communication apparatus is, for example, the user plane network element, or a function module in the user plane network element. In an optional implementation, the communication apparatus includes a processing unit (which may also be referred to as a processing module) and a transceiver unit (which may also be referred to as a transceiver module). The transceiver unit can implement a sending function and a receiving function. When the transceiver unit implements the sending function, the transceiver unit may be referred to as a sending unit (which may also be referred to as a sending module). When the transceiver unit implements the receiving function, the transceiver unit may be referred to as a receiving unit (which may also be referred to as a receiving module). The sending unit and the receiving unit may be a same function module. The function module is referred to as the transceiver unit, and the function module can implement the sending function and the receiving function. Alternatively, the sending unit and the receiving unit may be different function modules, and the transceiver unit is a general term for the function modules.

Specifically, the processing unit is configured to obtain first indication information. The first indication information indicates to trigger, when a first service occurs, establishment of a QoS rule of a QoS flow corresponding to the first service. The transceiver unit is configured to: when the first service meets a first condition, send flow description information of the first service and an identifier of a first rule to a session management network element. The first rule corresponds to the first indication information. The first rule is used to establish the QoS rule.

In a possible implementation, the processing unit is configured to: when obtaining the first indication information, obtain the first indication information and the first condition.

In a possible implementation, the transceiver unit is configured to: when obtaining the first indication information and the first condition, receive the first rule and a second rule from the session management network element. The first rule includes the first indication information. The second rule includes the first condition.

In a possible implementation, the processing unit is configured to obtain a plurality of predefined rules. The transceiver unit is configured to: when obtaining the first indication information and the first condition, receive a second rule from the session management network element. The second rule includes a name of a first predefined rule. The first predefined rule is one of the plurality of predefined rules. The first predefined rule includes the first rule and the first condition. The first rule includes the first indication information. The processing unit is configured to determine the first predefined rule from the plurality of predefined rules based on the name of the first predefined rule.

In a possible implementation, the transceiver unit is configured to: when obtaining the first indication information and the first condition, receive the first rule and a second rule from the session management network element. The first rule includes an application detection and control event subscription information element. The application detection and control event subscription information element indicates the first indication information. The second rule includes the first condition.

In a possible implementation, the first rule is a usage reporting rule, and the second rule is a packet detection rule.

In a possible implementation, the transceiver unit is configured to: when the first service meets the first condition, send first event information to the session management network element. The first event information indicates that the first service starts.

In a possible implementation, the first indication information indicates to trigger, when the first service stops, deletion of the QoS rule. The transceiver unit is configured to send the flow description information of the first service, the identifier of the first rule, and second event information to the session management network element. The second event information indicates that the first service stops, and the flow description information of the first service and the first rule are used to determine the QoS rule.

In a possible implementation, the first condition includes that service duration is greater than or equal to a duration threshold, and/or a service transmission rate is greater than or equal to a transmission rate threshold.

In a possible implementation, the flow description information of the first service includes 5-tuple information of the first service.

In a possible implementation, the processing unit is further configured to obtain first information. The first information is used to determine the first service. The first information includes an application identifier of the first service and/or the service flow description information of the first service.

According to a fourth aspect, this application provides a communication apparatus. The communication apparatus may be the session management network element in the second aspect. The communication apparatus has a function of the foregoing session management network element. The communication apparatus is, for example, the session management network element, or a function module in the session management network element. In an optional implementation, the communication apparatus includes a processing unit (which may also be referred to as a processing module) and a transceiver unit (which may also be referred to as a transceiver module). For an implementation of the transceiver unit, refer to the descriptions in the third aspect.

The transceiver unit is configured to receive flow description information of a first service and an identifier of a first rule from a user plane network element.

The processing unit is configured to: determine corresponding QoS information based on the identifier of the first rule; and establish a QoS rule of a QoS flow corresponding to the first service based on the QoS information and the flow description information of the first service.

In a possible implementation, the transceiver unit is configured to receive first event information from the user plane network element. The first event information indicates that the first service starts. The processing unit is configured to: when establishing the QoS rule of the QoS flow corresponding to the first service based on the QoS information and the flow description information of the first service, establish the QoS rule of the QoS flow corresponding to the first service based on the QoS information, the flow description information of the first service, and the first event information.

In a possible implementation, the transceiver unit is configured to receive a policy and charging control rule from a policy control network element. The policy and charging control rule includes first indication information and a first condition. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold. The processing unit is configured to determine the first rule and a second rule according to the policy and charging control rule. The first rule includes the first indication information. The second rule includes the first condition. The transceiver unit is configured to send the first rule and the second rule to the user plane network element.

In a possible implementation, the transceiver unit is configured to: receive a name of a first predefined rule from a policy control network element; and send a second rule to the user plane network element. The second rule includes the name of the first predefined rule. The first predefined rule is one of a plurality of predefined rules obtained by the user plane network element. The first predefined rule includes the first rule and a first condition. The first rule includes first indication information. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold.

In a possible implementation, the first rule is a usage reporting rule, and the second rule is a packet detection rule.

In a possible implementation, the first indication information indicates to trigger, when the first service stops, deletion of the QoS rule.

The transceiver unit is configured to receive the flow description information of the first service, the identifier of the first rule, and second event information from the user plane network element. The second event information indicates that the first service stops.

The processing unit is configured to: determine the QoS rule based on the identifier of the first rule and the flow description information of the first service; and delete the QoS rule based on the second event information.

According to a fifth aspect, this application provides a method for establishing a quality of service QoS rule. The method includes:

A user plane network element obtains first indication information. The first indication information indicates to trigger, when a first service occurs, establishment of a QoS rule of a QoS flow corresponding to the first service. When the first service meets a first condition, the user plane network element sends flow description information of the first service and an identifier of a first rule to a session management network element. The first rule corresponds to the first indication information. The first rule is used to establish the QoS rule.

The session management network element determines corresponding QoS information based on the identifier of the first rule, and establishes the QoS rule of the QoS flow corresponding to the first service based on the QoS information and the flow description information of the first service.

In a possible implementation, a policy control network element sends a policy and charging control rule to the session management network element. The policy and charging control rule includes the first indication information and the first condition. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold. The session management network element determines the first rule and a second rule according to the policy and charging control rule. The first rule includes the first indication information. The second rule includes the first condition. The session management network element sends the first rule and the second rule to the user plane network element.

In a possible implementation, the first rule is a usage reporting rule, and the second rule is a packet detection rule.

In a possible implementation, a policy control network element sends a name of a first predefined rule to the session management network element. The session management network element sends a second rule to the user plane network element. The second rule includes the name of the first predefined rule. The first predefined rule is one of a plurality of predefined rules obtained by the user plane network element. The first predefined rule includes the first rule and a first condition. The first rule includes the first indication information. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold. The user plane network element obtains the plurality of predefined rules. The user plane network element determines the first predefined rule from the plurality of predefined rules based on the name of the first predefined rule in the second rule.

In a possible implementation, a policy control network element sends a policy and charging control rule to the session management network element. The policy and charging control rule includes an application detection and control event subscription information element and a first condition. The session management network element sends the first rule and a second rule to the user plane network element. The first rule includes the application detection and control event subscription information element. The application detection and control event subscription information element indicates the first indication information. The second rule includes the first condition.

In a possible implementation, when the first service meets the first condition, the user plane network element sends first event information to the session management network element. The first event information indicates that the first service starts. When the session management network element establishes the QoS rule of the QoS flow corresponding to the first service based on the QoS information and the flow description information of the first service, the session management network element establishes the QoS rule of the QoS flow corresponding to the first service based on the QoS information, the flow description information of the first service, and the first event information.

In a possible implementation, the first indication information indicates to trigger, when the first service stops, deletion of the QoS rule. When the first service stops, the user plane network element sends the flow description information of the first service, the identifier of the first rule, and second event information to the session management network element. The second event information indicates that the first service stops, and the flow description information of the first service and the first rule are used to determine the QoS rule. The session management network element determines the QoS rule based on the identifier of the first rule and the flow description information of the first service. The session management network element deletes the QoS rule based on the second event information.

In a possible implementation, the first condition includes that service duration is greater than or equal to a duration threshold, and/or a service transmission rate is greater than or equal to a transmission rate threshold.

In a possible implementation, the flow description information of the first service includes 5-tuple information of the first service.

In a possible implementation, the user plane network element further obtains first information. The first information is used to determine the first service. The first information includes an application identifier of the first service and/or service flow description information of the first service.

According to a sixth aspect, an embodiment of this application provides a communication apparatus, configured to perform the method according to the first aspect or the method according to the second aspect.

According to a seventh aspect, an embodiment of this application provides a communication device, including at least one processing element and at least one storage element. The at least one storage element is configured to store a program and data, and the at least one processing element is configured to read and execute the program and the data that are stored in the storage element, to enable the method according to the first aspect or the second aspect in this application to be implemented.

According to an eighth aspect, an embodiment of this application further provides a computer program product. When the computer program product runs on a computer, the computer is enabled to perform the method according to any one of the foregoing aspects.

According to a ninth aspect, an embodiment of this application further provides a computer-readable storage medium. The computer-readable storage medium stores a computer program. When the computer program is executed by a computer, the computer is enabled to perform the method according to any one of the foregoing aspects.

According to a tenth aspect, an embodiment of this application further provides a chip. The chip is configured to read a computer program stored in a memory, to perform the method according to any one of the foregoing aspects.

According to an eleventh aspect, an embodiment of this application further provides a chip system. The chip system includes a processor, configured to support a computer apparatus in implementing the method according to any one of the foregoing aspects. In a possible implementation, the chip system further includes a memory. The memory is configured to store a program and data that are necessary for the computer apparatus. The chip system may include a chip, or may include a chip and another discrete component.

According to a twelfth aspect, a communication system is provided, and includes the communication apparatus according to the third aspect and the communication apparatus according to the fourth aspect.

For technical effects that can be achieved in any one of the third aspect to the twelfth aspect, refer to descriptions of technical effects that can be achieved in any possible design in any one of the first aspect and the second aspect. Repeated parts are not described.

In this application, based on implementations according to the foregoing aspects, the implementations may be further combined to provide more implementations.

### BRIEF DESCRIPTION OF DRAWINGS

FIG. 1 is a diagram of a 5G communication system according to an embodiment of this application;
FIG. 2 is an overview flowchart of a method for establishing a QoS rule according to an embodiment of this application;
FIG. 3 is a diagram of a method for triggering establishment or deletion of a quality of service rule according to an embodiment of this application;
FIG. 4 is a diagram of another method for triggering establishment or deletion of a quality of service rule according to an embodiment of this application;
FIG. 5A is a diagram of still another method for triggering establishment or deletion of a quality of service rule according to an embodiment of this application;
FIG. 5B is a diagram of still another method for triggering establishment or deletion of a quality of service rule according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

The following clearly and completely describes technical solutions in embodiments of this application with reference to the accompanying drawings in embodiments of this application.

To facilitate understanding of the technical solutions in embodiments of this application, the following first briefly describes related conventional technologies.

The technical solutions provided in embodiments of this application may be applied to various communication systems. For example, the technical solutions may be applicable to a 4G system or a 5G system, or may be applicable to another future-oriented new system. This is not limited in embodiments of this application. In addition, the terms "system" and "network" may be interchangeable.

### 1. 5G system

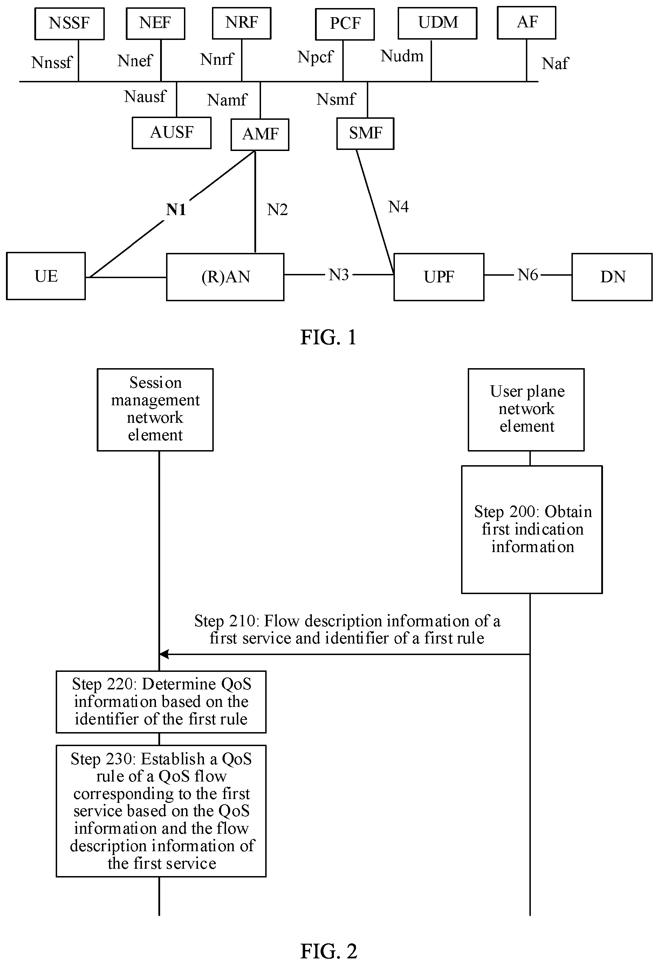

FIG. 1 is a diagram of an architecture of a 5G communication system formulated in the 3^{rd} generation partnership project (3^{rd} generation partnership project, 3GPP) standard. The communication system includes a terminal device (for example, user equipment (user equipment, UE)), a radio access network (radio access network, RAN), and a core network (Core network, CN). Logically, for a data network (data network, DN), network elements of the core network may be divided into two parts: a user plane and a control plane. The control plane is responsible for mobile network management, and the user plane is responsible for service data transmission.

The terminal device is an entrance for interaction between a mobile user and a network, and can provide a basic computing capability and a storage capability, display a service window to the user, and receive a user operation input. A next generation terminal device (NextGen UE) may establish a signal connection and a data connection to the RAN by using a new radio technology, to transmit a control signal and service data to a mobile network. The terminal device may include various handheld devices, vehicle-mounted devices, and wearable devices that have a wireless communication function, computing devices or other processing devices connected to a wireless modem, and various forms of terminals, mobile stations (mobile stations, MSs), terminals (terminals), soft terminals, and the like, for example, water meters, electricity meters, and sensors.

The RAN is deployed near the terminal device, provides a network access function for an authorized user in a specific area, and can determine transmission tunnels of different quality based on a user level, a service requirement, and the like to transmit user data. The RAN can manage resources of the RAN, properly use the resources, provide an access service for the terminal device on demand, and is responsible for forwarding the control signal and the user data between the terminal device and the core network.

The core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached, allocates a network resource to the terminal device when the terminal device has a service request, updates the network resource for the terminal device when the terminal device moves, provides a fast recovery mechanism for the terminal device when the terminal device is idle, releases the network resource for the terminal device when the terminal device is detached, and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device.

The data network (data network, DN) is a data network that provides a service for the user. Generally, a client is located on the terminal device, and a server is located on the data network. The data network may be a private network, for example, a local area network, or may be an external network that is not managed or controlled by an operator, for example, the Internet (Internet), or may be a dedicated network jointly deployed by operators, for example, a network that provides an IP multimedia network subsystem (IP multimedia core network subsystem, IMS) service.

A network architecture of a next generation core network device is readjusted based on the 5G network architecture. Generally, the control plane uses a service-based interface to provide a related function externally. The control plane and the user plane exchange a message through an N4 interface to implement delivery of a user policy from the control plane to the user plane and event reporting from the user plane to the control plane. According to a current network architecture, a policy control network element is responsible for functions of defining, delivering, and updating a user policy subscribed by the user, and a session management network element needs to be responsible for selection of a user plane network element, policy delivery, event reporting, and non-session-level management functions such as heartbeat checking of the user plane network element, and load reporting of the user plane network element. The user plane network element is responsible for performing service awareness, rule and policy matching, charging and control policy execution, and the like on a data packet of the user based on a session context established by the session management network element for the terminal device and according to a policy of the terminal device.

A core network user plane includes a user plane function (user plane function, UPF). A core network control plane includes an access and mobility management function (access and mobility management function, AMF), a session management function (session management function, SMF), a network exposure function (network exposure function, NEF), a network function repository function (NF repository function, NRF), unified data management (unified data management, UDM), a policy control function (policy control function, PCF), an application function (application function, AF), an authentication server function (authentication server function, AUSF), and a network slice selection function (network slice selection function, NSSF).

The core network control plane uses a service-based architecture. Control plane network elements interact with each other in a service invoking manner to replace a point-to-point communication manner in a conventional architecture. In the service-based architecture, the control plane network element exposes a service to another control plane network element, so that the another control plane network element invokes the service. In point-to-point communication, a communication interface between control plane network elements stores a set of specific messages, and the messages can be used only when the control plane network elements at two ends of the interface perform communication.

The following briefly describes functions of some functional entities in the core network.
1. The session management network element is mainly configured to: manage a session, allocate and manage an IP address of the terminal device, select a manageable user equipment plane function, serve as a termination point of an interface towards policy control and charging functions, notify downlink data, and the like. In 5G communication, the session management network element may be an SMF network element. In future communication such as 6G communication, a session management function network element may still be the SMF network element or have another name. This is not limited in this application. Nsmf is a service-based interface provided by the SMF. The SMF may communicate with another network function through Nsmf.
2. An access management network element is mainly used for mobility management, access management, and the like. For example, the access management network element may be a mobility management entity (mobility management entity, MME) function in a 4G communication network or an AMF network element in a 5G network. In the future communication such as the 6G communication, the access management network element may still be the AMF network element or have another name. This is not limited in this application. Namf is a service-based interface provided by the AMF. The AMF may communicate with another network function through Namf.
3. A network exposure network element is mainly configured to securely expose, to the outside, a service, a capability, and the like that are provided by a 3GPP network function. In the 5G communication, the network exposure network element may be an NEF network element. In the future communication such as the 6G communication, the network exposure function network element may still be the NEF network element or have another name. This is not limited in this application. Nnef is a service-based interface provided by the NEF. The NEF may communicate with another network function through Nnef.
4. A network repository network element is configured to: provide service registration, discovery, and authorization, and maintain available network function (network function, NF) instance information, to implement on-demand configuration of a network function and a service and interconnection between NFs. In the 5G communication, the network repository network element may be an NRF network element. In the future communication such as the 6G communication, a network repository function network element may still be the NRF network element or have another name. This is not limited in this application. Nnrf is a service-based interface provided by the NRF. The NRF may communicate with another network function through Nnrf.
5. A policy control network element is configured to: guide a unified policy framework for network behavior, and provide policy rule information and the like for a control plane function network element (for example, the AMF or the SMF). In the 5G communication, the policy control network element may be a PCF network element. In the future communication such as the 6G communication, the policy control network element may still be the PCF network element or have another name. This is not limited in this application. Npcf is a service-based interface provided by the PCF. The PCF may communicate with another network function through Npcf.
6. A data management network element is used for user identifier processing, subscription, access authentication, registration, mobility management, or the like. In the 5G communication, the data management network element may be a UDM network element. In the future communication such as the 6G communication, the data management network element may still be the UDM network element or have another name. This is not limited in this application. Nudm is a service-based interface provided by the UDM. The UDM may communicate with another network function through Nudm.
7. An application network element is configured to: perform application-affected data routing, access the network exposure function, interact with a policy framework to perform policy control, or the like. In the 5G communication, the application network element may be an AF network element. In the future communication such as the 6G communication, the application network element may still be the AF network element or have another name. This is not limited in this application. Naf is a service-based interface provided by the AF. The AF may communicate with another network function through Naf.
8. The user plane network element is used for packet routing and forwarding, handling of quality of service (quality of service, QoS) of user plane data, or the like. In the 5G communication, the user plane network element may be a user plane function (user plane function, UPF) network element. In the future communication such as the 6G communication, the user plane network element may still be the UPF network element or have another name. This is not limited in this application.
9. An authentication service network element is mainly used for user authentication or the like. In the 5G communication, the authentication service network element may be an AUSF network element. In the future communication such as the 6G communication, the authentication service network element may still be the AUSF network element or have another name. This is not limited in this application. Nausf is a service-based interface provided by the AUSF. The AUSF may communicate with another network function through Nausf.
10. A network slice selection function network element is configured to select a network slice for the terminal device. In the 5G communication, the network slice selection function network element may be an NSSF network element. In the future communication such as the 6G communication, the network slice selection function network element may still be the NSSF network element or have another name. This is not limited in this application.

It may be understood that the core network may further include another network element. This is not limited in this application.

### 2. QoS

Each QoS flow is uniquely identified by a quality of service flow identifier (QoS flow ID, QFI), and the QFI is unique in each PDU session.

5G QoS is classified into two types: a guaranteed bit rate flow (GBR QoS Flow) and a non-guaranteed bit rate flow (Non-GBR QoS Flow), and may specifically include but is not limited to the following parameters: a 5G QoS identifier (5G QoS identifier, 5QI) (corresponding to a QoS level) and an allocation and retention priority (allocation and retention priority, ARP).

The guaranteed bit rate flow may include but is not limited to the following dedicated parameters: a guaranteed bit flow rate, a maximum bit flow rate, notification control (notification control), a maximum tolerable packet loss rate (uplink or downlink voice media) (maximum packet loss rate-UL/DL (voice media)), and the like. The non-guaranteed bit rate flow may include but is not limited to the following dedicated parameters: a total maximum bit rate of a single PDU session (session-AMBR), a total maximum bit rate of UE (UE-AMBR), a reflective QoS attribute (reflective QoS attribute, RQA), and the like.

In a 5G QoS flow mapping manner, in a downlink data transmission process, the UPF maps a data packet to a QoS flow based on a service data flow (service data flow, SDF) template, and marks a QFI in an N3 tunnel header. An access network (access network, AN) device maps the data packet to a data radio bearer (data radio bearer, DBR) based on the QFI, and transmits the data packet to the UE. In an uplink data transmission process, a non-access stratum (non-access stratum, NAS) layer of the UE maps a data packet to a QoS flow according to a QoS rule, and an access stratum (access stratum, AS) layer is responsible for mapping the QoS flow to a DRB. The QoS rule includes a QFI corresponding to the QoS flow, a packet filtering set, and a priority value. The AN marks the QFI in an N3 tunnel header based on the QFI of the data packet received on the DRB. The UPF receives the data packet sent by the AN, and performs verification.

In a QoS establishment mechanism, a signaling control QoS mechanism and a reflective QoS mechanism (used only for a QoS flow of the non-guaranteed bit rate flow type) are supported.

It may be understood that, in this application, a QoS rule of a QoS flow may be established by using a QoS flow creation procedure or a QoS flow update procedure. When it is determined to establish the QoS rule of the QoS flow, and the QoS flow has not been created, the QoS flow creation procedure is triggered, to establish the QoS rule of the QoS flow. When it is determined to establish the QoS rule of the QoS flow, and the QoS flow has been created, the QoS flow update procedure is triggered, to add a new QoS rule for the QoS flow. Each QoS flow may include one or more QoS rules.

In addition, the QoS rule of the QoS flow may be deleted by using a QoS flow deletion procedure or the QoS flow update procedure. When it is determined to delete the QoS rule of the QoS flow, and there is only one remaining QoS rule corresponding to the QoS flow, the QoS flow deletion procedure is triggered, to delete the QoS rule of the QoS flow. When it is determined to establish the QoS rule of the QoS flow, and there are a plurality of QoS rules corresponding to the QoS flow, the QoS flow update procedure is triggered, to delete one of the plurality of QoS rules corresponding to the QoS flow.

Based on this, to effectively trigger establishment of a QoS rule, this application provides a method for establishing the QoS rule. As shown in FIG. 2, the method includes the following steps.

Step 200: A user plane network element obtains first indication information.

The first indication information indicates to trigger, when a first service occurs, establishment of a QoS rule of a QoS flow corresponding to the first service. This may be further described as follows: The first indication information indicates to trigger, when the first service occurs, creation or update of the QoS flow corresponding to the first service.

In a possible implementation, when the user plane network element obtains the first indication information, the user plane network element may obtain the first indication information and a first condition.

For example, the first condition includes at least one of the following:

Service duration is greater than or equal to a duration threshold, a service transmission rate is greater than or equal to a transmission rate threshold, a service bandwidth is greater than or equal to a bandwidth threshold, and a service type is a preset service type (for example, a game or a video).

The duration threshold may also be described as minimum duration for triggering the establishment of the QoS rule, and the transmission rate threshold may be described as a minimum transmission rate for triggering the establishment of the QoS rule. It should be noted that specific content included in the first condition is not limited in this application.

For example, the user plane network element may obtain the first indication information and the first condition in, but not limited to, the following manners.

Manner 1: The user plane network element receives a first rule and a second rule from a session management network element. The first rule includes the first indication information. The second rule includes the first condition.

For example, the session management network element receives a policy and charging control (policy and charging control, PCC) rule from a policy control network element. The policy and charging control rule includes the first indication information and the first condition. The session management network element determines the first rule and the second rule according to the policy and charging control rule, and sends the first rule and the second rule to the user plane network element.

The PCC rule herein may also be referred to as a dynamic PCC rule. In addition, the PCC rule further includes QoS information. The session management network element may map an identifier of the first rule to the QoS information, to implement step 220. In other words, there is an association relationship between the identifier of the first rule and the QoS information.

In addition, the first rule is associated with the second rule, and the second rule further includes the identifier of the first rule. For example, the first rule may be a usage reporting rule (usage reporting rule, URR), and the second rule may be a packet detection rule (packet detection rule, PDR). Packet detection information (packet detection information, PDI) in the PDR may include the first condition. The URR is associated with the PDR, and the PDR further includes a URR ID (identifier).

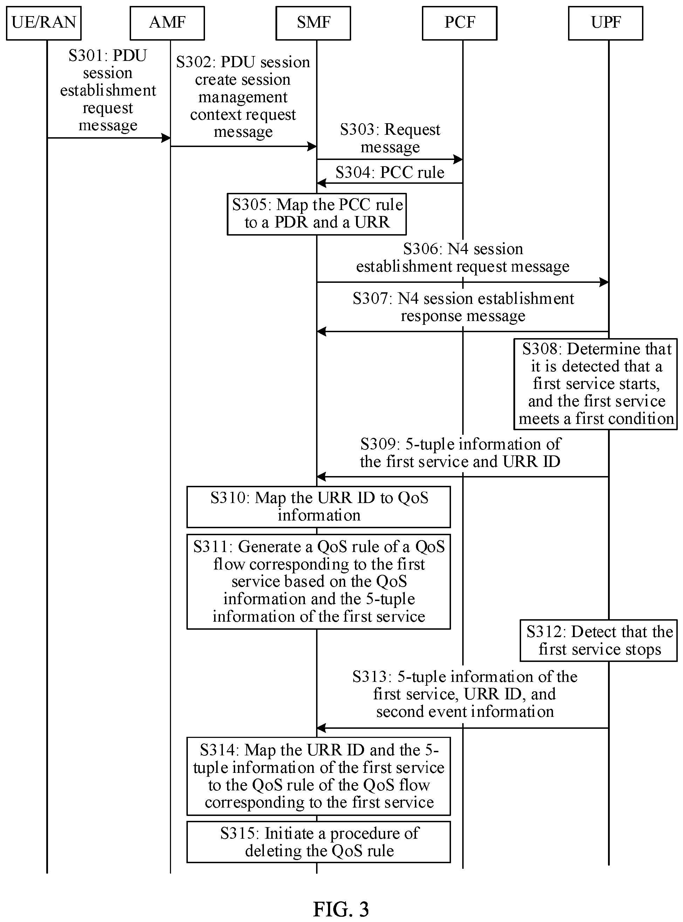

In addition, for a detailed procedure of Manner 1, refer to the following embodiment shown in FIG. 3.

Manner 2: The user plane network element may obtain a plurality of predefined rules in advance, and then receive a second rule from a session management network element. The second rule includes a name of a first predefined rule. The first predefined rule is one of the plurality of predefined rules, and the first predefined rule includes a first rule and the first condition. The first rule includes the first indication information. Further, the user plane network element may determine the first predefined rule from the plurality of predefined rules based on the name of the first predefined rule, that is, obtain the first indication information and the first condition.

For example, the predefined rule may be a predefined PCC rule. The first predefined rule is a predefined PCC rule. The first rule may be a URR. The second rule may be a PDR. The PDR includes the name of the first predefined rule, in other words, a name of the predefined PCC rule.

For example, the session management network element receives a PCC rule from a policy control network element. The PCC rule includes the name of the first predefined rule. Further, the session management network element sends the second rule to the user plane network element. The second rule includes the name of the first predefined rule.

It should be noted that a part of content (hereinafter referred to as a first part of content) of the first predefined rule stored by the session management network element and another part of content (hereinafter referred to as a second part of content) of the first predefined rule stored by the user plane network element jointly constitute the first predefined rule. The first part of content and the second part of content may have overlapping content, and also have non-overlapping content. The first part of content includes QoS information. The session management network element may map an identifier of the first rule to the QoS information, to implement step 220. In other words, there is an association relationship between the identifier of the first rule and the QoS information.

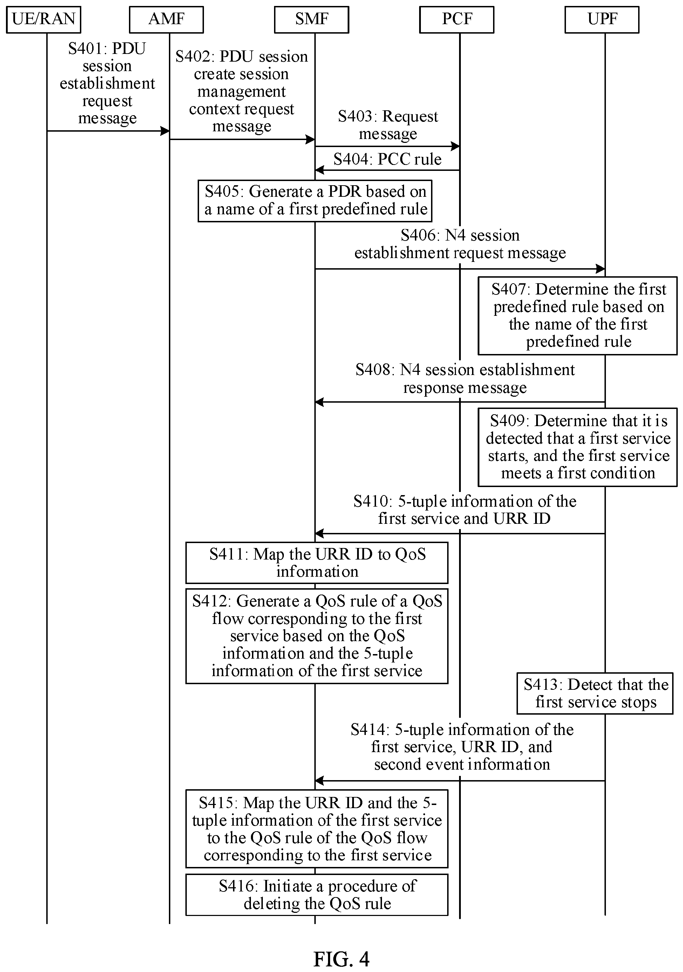

In addition, for a detailed procedure of Manner 2, refer to the following embodiment shown in FIG. 4.

Manner 3: The user plane network element receives a first rule and a second rule from a session management network element. The first rule includes an application detection and control (application detection and control, ADC) event subscription information element. The application detection and control event subscription information element indicates the first indication information. The second rule includes the first condition.

In addition, the first rule is associated with the second rule. The second rule includes an identifier of the first rule. For example, the second rule may be a PDR, and the first rule may be a URR. PDI in the PDR may include the first condition. A measurement method (measurement method) or a reporting trigger (reporting trigger) in the URR includes the ADC event subscription information element. The URR is associated with the PDR, and the PDR further includes a URR ID.

For example, the session management network element may receive, from a policy control network element, a PCC rule that carries the ADC event subscription information element. The session management network element may map the PCC rule that carries the ADC event subscription information element to the first rule and the second rule. The session management network element sends the first rule and the second rule to the user plane network element.

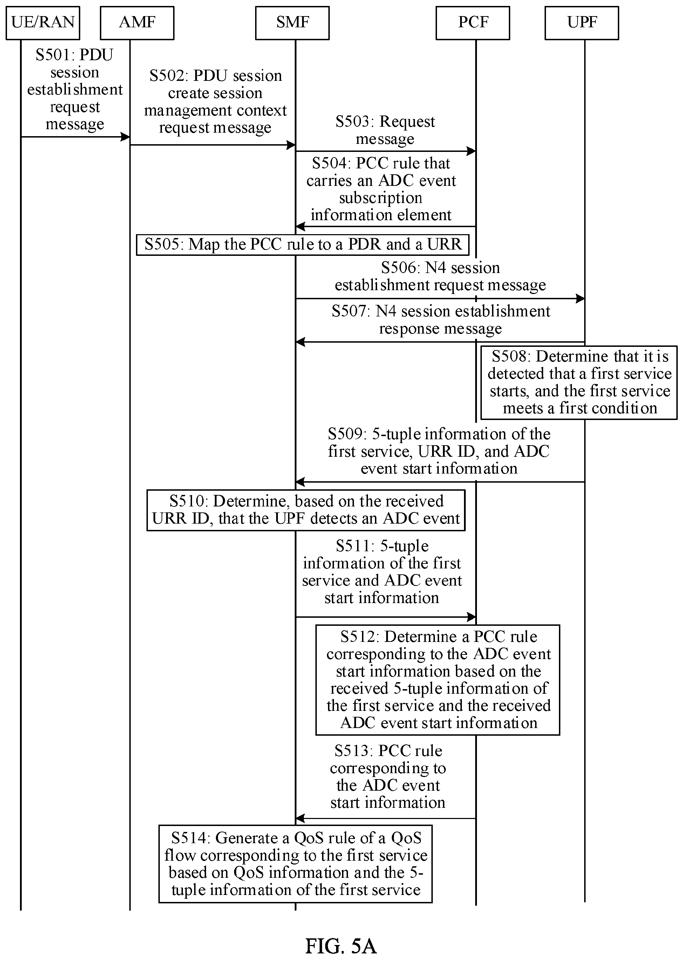

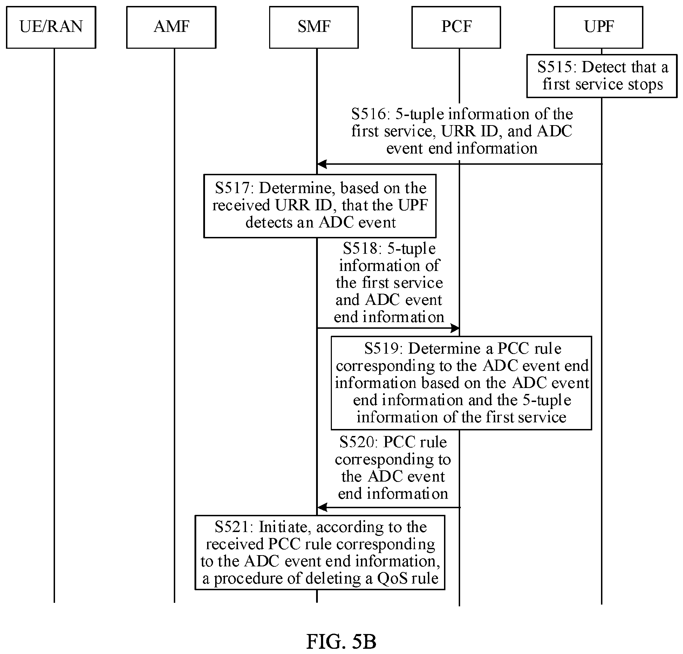

In addition, for a detailed procedure of Manner 3, refer to the following embodiment shown in FIG. 5A and FIG. 5B.

In a possible implementation, the user plane network element may further obtain first information. The first information is used to determine the first service. The first information includes an application identifier of the first service and/or service flow description information of the first service.

For example, the application identifier may correspond to one application (application, APP) or a group of applications. Further, the user plane network element may sense an application identifier of a service packet, and match the application identifier of the service packet with the application identifier in the first information, to determine that the first service is detected.

For example, the service flow description information may include one or more of information such as a server IP address, a port number, and a protocol type (for example, a transmission control protocol (transmission control protocol, TCP)/user datagram protocol (user datagram protocol, UDP)). Further, the user plane network element may sense an IP address and a port number of the service packet, and/or TCP/UDP, and match the IP address and the port number of the service packet, and/or the TCP/UDP with the service flow description information in the first information, to determine that the first service is detected.

In addition, the first information may also be understood as content included in the first condition, or may be independent of the first condition. This is not limited in this application.

Step 210: When the first service meets the first condition, the user plane network element sends the flow description information of the first service and the identifier of the first rule to the session management network element, where the first rule corresponds to the first indication information.

For example, that the first service meets the first condition may be understood as that a service duration of the first service is greater than or equal to the duration threshold, and/or a service transmission rate of the first service is greater than or equal to the transmission rate threshold.

For example, the flow description information of the first service includes 5-tuple information of the first service. For example, the 5-tuple information includes a source address, a target address, a source port, a target port, and a protocol number.

If the user plane network element performs the foregoing Manner 1 or Manner 2, when the first service meets the first condition, the user plane network element sends the flow description information of the first service and the identifier of the first rule to the session management network element based on the first indication information.

If the user plane network element performs the foregoing Manner 3, when the first service meets the first condition, the user plane network element sends the flow description information of the first service and the identifier of the first rule to the session management network element based on the ADC event subscription information element in the first rule. There is an association relationship between the ADC event subscription information element and the first service. When the user plane network element detects the first service and the first service meets the first condition, the user plane network element may send the flow description information of the first service and the identifier of the first rule to the session management network element based on the ADC event subscription information element. Therefore, the ADC event subscription information element may implement a function of the first indication information, to be specific, trigger, when the first service occurs, the establishment of the QoS rule of the QoS flow corresponding to the first service.

If the user plane network element performs the foregoing Manner 1, Manner 2, or Manner 3, the user plane network element may further send first event information to the session management network element. The first event information indicates that the first service starts.

When the user plane network element performs the foregoing Manner 3, the first event information herein may also be referred to as ADC event start information.

Step 220: The session management network element determines the QoS information based on the identifier of the first rule.

For example, if the user plane network element performs the foregoing Manner 1 or Manner 2, the session management network element may map the identifier (for example, the URR ID) of the first rule to the QoS information.

If the user plane network element performs the foregoing Manner 3, because the PCC rule that carries the ADC event subscription information element does not include the QoS information, the session management network element determines, based on the identifier of the first rule, that the user plane network element detects an ADC event, so that the session management network element sends a first notification message to the policy control network element. The first notification message indicates that the ADC event is detected, and the first notification message includes the flow description information of the first service and the ADC event start information. The policy control network element determines a PCC rule corresponding to the ADC event start information based on the received ADC event start information and the received flow description information of the first service, and sends the PCC rule corresponding to the ADC event start information to the session management network element. The PCC rule corresponding to the ADC event start information includes the QoS information.

Step 230: The session management network element establishes the QoS rule of the QoS flow corresponding to the first service based on the QoS information and the flow description information of the first service.

For example, the session management network element generates the QoS rule of the QoS flow corresponding to the first service based on the QoS information and the flow description information of the first service, triggers an existing creation or update procedure of the QoS flow, and sends the QoS rule to a terminal device. For details, refer to the existing creation or update procedure of the QoS flow, and refer to section 4.3 in the 3GPP standard protocol 23.502. Details are not described herein.

Currently, if a core network device establishes a QoS flow for a service whose service duration is short, because a creation procedure or an update procedure of the QoS flow is time-consuming, after the creation procedure or the update procedure of the QoS flow is completed, the service may have ended or is about to end. Consequently, establishing and configuring a QoS rule by the core network device for the terminal device may not improve service experience, and may cause a large quantity of signaling overheads. If there are a large quantity of service flows with short duration, a signaling storm may further occur.

According to the method provided in this application, when the first service meets the first condition, for example, in a scenario in which the service duration of the first service is greater than the duration threshold, the session management network element establishes and configures the QoS rule of the QoS flow corresponding to the first service for the terminal device. This can improve service experience and avoid the signaling storm.

In addition, in a possible implementation, the first indication information may further indicate to trigger, when the first service stops, deletion of the QoS rule.

For example, after the QoS rule of the QoS flow corresponding to the first service is established, when the first service stops, the user plane network element may further send the flow description information of the first service, the identifier of the first rule, and second event information to the session management network element based on the first indication information. The second event information indicates that the first service stops or the first service ends.

If the user plane network element performs the foregoing Manner 1 or Manner 2, the session management network element may delete the QoS rule of the QoS flow corresponding to the first service based on the identifier of the first rule, the flow description information of the first service, and the second event information. For example, the session management network element may map the identifier of the first rule and the flow description information of the first service to the QoS rule that is of the QoS flow corresponding to the first service and that is established in step 230. There is an association relationship between the QoS rule and the identifier of the first rule, and an association relationship between the QoS rule and the flow description information of the first service. The session management network element deletes the QoS rule based on the second event information. For example, the session management network element triggers a deletion procedure or an update procedure of the QoS flow corresponding to the first service, to delete the QoS rule. For details, refer to an existing deletion or update procedure of the QoS flow. Details are not described herein.

If the user plane network element performs the foregoing Manner 3, the second event information may also be referred to as ADC event end information. When the first service stops, the user plane network element may further send the flow description information of the first service, the identifier of the first rule, and the ADC event end information to the session management network element based on the ADC event subscription information element. The session management network element determines, based on the identifier of the first rule, that the user plane network element detects the ADC event, so that the session management network element sends a second notification message to the policy control network element. The second notification message indicates that the ADC event is detected, and the second notification message includes the flow description information of the first service and the ADC event end information. The policy control network element determines a PCC rule corresponding to the ADC event end information based on the received ADC event end information and the received flow description information of the first service, and sends the PCC rule corresponding to the ADC event end information to the session management network element. The PCC rule corresponding to the ADC event end information indicates to delete the QoS rule that is of the QoS flow corresponding to the first service and that is established in step 230. There is an association relationship between the QoS rule and the flow description information of the first service. The session management network element triggers deletion of the QoS rule according to the PCC rule.

It should be noted that the first rule itself does not have a function of indicating to establish the QoS rule corresponding to the QoS flow of the first service, or a function of indicating to delete the QoS rule corresponding to the QoS flow of the first service. Specific functions of the first rule determined with reference to different scenarios are different.

For example, when the user plane network element sends the identifier of the first rule, the first event information, and the flow description information of the first service to the session management network element, the session management network element may determine, based on the first event information, that the first service starts, determine the QoS information based on the identifier of the first rule, further generate the QoS rule of the QoS flow corresponding to the first service based on the flow description information of the first service and the QoS information, and send the QoS rule to the terminal device. In other words, in this scenario, the first rule can be used to determine the QoS information, and may be further used to establish the QoS rule corresponding to the QoS flow of the first service.

For another example, when the user plane network element sends the identifier of the first rule, the second event information, and the flow description information of the first service to the session management network element, the session management network element may determine, based on the second event information, that the first service ends, determine, based on the identifier of the first rule and the flow description information of the first service, a QoS rule previously generated for the QoS flow of the first service, and trigger the terminal device to delete the QoS rule. In other words, in the foregoing scenario, the first rule can be used to determine the QoS rule, and may be further used to delete the QoS rule corresponding to the QoS flow of the first service.

It may be understood that the embodiment shown in FIG. 2 may be further applied to a 4G communication system. Specifically, the user plane network element may be replaced with a PGW-U, the QoS flow may be replaced with a dedicated bearer, the session management network element may be replaced with a PGW-C, and the policy control network element may be replaced with a PCRF.

According to the foregoing method, the user plane network element triggers a creation procedure or an update procedure of the QoS flow corresponding to the first service based on the first indication information, and further establishes the QoS rule of the QoS flow corresponding to the first service. The signaling storm can be avoided by determining whether the first service meets the first condition. Therefore, the establishment of the QoS rule of the QoS flow corresponding to the first service is effectively triggered, and actual service experience can be improved.

It is particularly noted that a PDU session in the following embodiments may be another type of session, and a name is not limited.

For the foregoing Manner 1, FIG. 3 shows a specific procedure of triggering establishment or deletion of a QoS rule. A procedure of a method is specifically described by using an example in which a session management network element is an SMF, a user plane network element is a UPF, a first rule is a URR, and a second rule is a PDR. The method may include the following steps.

S301: UE sends a PDU session establishment request (PDU Session Establishment Request) message to an AMF.

For example, the UE is activated in a 5G network, and initiates a PDU session establishment procedure.

S302: The AMF sends a PDU session create session management context request (Nsmf_PDUSession_Creat-eSMContext Request) message to the SMF.

S303: The SMF sends a request message to a PCF, where the request message is used to request a PCC rule.

For example, the SMF sends a session management policy control create request (Npcf_SMPolicy-Control_Create Request) message to the PCF through an N7 interface.

S304: The PCF sends the PCC rule to the SMF.

For example, the PCF sends a session management policy control create response (Npcf_SMPolicy-Control_Create Response) message to the SMF through the N7 interface, where the message includes the PCC rule.

The PCC rule includes a first condition and first indication information. In addition, the PCC rule may further include an application identifier and/or service flow description information of a first service. The following provides descriptions by using only an example in which the PCC rule includes the application identifier of the first service. In addition, the PCC rule may further include QoS information.

S305: The SMF maps the PCC rule to the PDR and the URR.

PDI in the PDR includes the application identifier of the first service and the first condition. The URR includes the first indication information. The PDR is associated with the URR, and the PDR includes a URR ID.

S306: The SMF sends an N4 session establishment request (N4 Session Establishment/Modification Request) message to the UPF, where the message includes the PDR and the URR that are determined in S305.

For S306, refer to the descriptions of Manner 1 in step 200 in the embodiment shown in FIG. 2. Details are not described again.

S307: The UPF sends an N4 session establishment response (N4 Session Establishment/Modification Response) message to the SMF.

In addition, the N4 session establishment request message in S306 may be further replaced with an N4 session modification request (N4 Session Modification Request) message. Correspondingly, the N4 session establishment response message in S307 may be further replaced with an N4 session modification response (N4 Session Establishment/Modification Response) message.

For example, the UPF may use the application identifier of the first service as a condition of service awareness, record the application identifier of the first service in a context of the PDR, start service identification, and collect statistics on service duration and a service transmission rate.

S308: The UPF determines that it is detected that the first service starts, and the first service meets the first condition.

For example, the UPF detects a service packet accessed by the UE, determines, based on the service packet, whether an application identifier corresponding to the service packet matches the application identifier of the first service. If the application identifier corresponding to the service packet matches the application identifier of the first service, the UPF determines that the first service starts. If duration of the first service is greater than a duration threshold, and/or a transmission rate of the first service is greater than a transmission rate threshold, the UPF determines that the first service meets the first condition.

For S308, refer to the descriptions of step 210 in the embodiment shown in FIG. 2. Details are not described again.

S309: The UPF sends 5-tuple information of the first service and the URR ID to the SMF based on the first indication information.

For example, the UPF may send an N4 session reporting request (N4 Session Reporting Request) message to the SMF, where the message includes the 5-tuple information of the first service and the URR ID.

In addition, the UPF may further send first event information to the SMF. The first event information indicates that the first service starts.

For S309, refer to the descriptions of step 210 in the embodiment shown in FIG. 2. Details are not described again.

S310: The SMF maps the URR ID to the QoS information.

For S310, refer to the descriptions of step 220 in the embodiment shown in FIG. 2. Details are not described again.

In addition, the SMF may further send an N4 session reporting response (N4 Session Reporting Response) message to the UPF.

S311: The SMF generates a QoS rule of a QoS flow corresponding to the first service based on the QoS information and the 5-tuple information of the first service.

For S311, refer to the descriptions of step 230 in the embodiment shown in FIG. 2. Details are not described again.

Further, the SMF initiates a procedure of establishing the QoS rule of the QoS flow corresponding to the first service. If the first service has a corresponding QoS flow, the SMF may trigger an update procedure of the QoS flow of the first service, to add a QoS rule for the QoS flow of the first service. If the first service has no corresponding QoS flow, the SMF may trigger a creation procedure of the QoS flow of the first service, and further establish the QoS rule of the QoS flow of the first service. For details, refer to an existing creation or update procedure of the QoS flow. Details are not described herein. In addition, the UPF also completes the creation or update procedure of the QoS flow of the first service, to create or update the QoS flow of the first service of the UE on the UPF side. This ensures successful end-to-end creation or update of the QoS flow.

S312: The UPF detects that the first service stops.

For example, that the UPF detects that the first service stops may also be described as that the UPF senses that the first service ends. For example, if the UPF receives no service packet of the first service within a preset time period, the UPF determines that the first service stops.

S313: The UPF sends the 5-tuple information of the first service, the URR ID, and second event information to the SMF.

For example, the UPF sends the N4 session reporting request message to the SMF, where the message includes the 5-tuple information of the first service, the URR ID, and the second event information. The second event information indicates that the first service stops.

S314: The SMF maps the URR ID and the 5-tuple information of the first service to the QoS rule of the QoS flow of the first service. There is a mapping relationship between the QoS rule and the URR ID, and a mapping relationship between the QoS rule and the 5-tuple information of the first service.

S315: The SMF initiates a procedure of deleting the QoS rule.

For example, if the QoS flow corresponding to the first service includes only the QoS rule, the SMF may trigger a deletion procedure of the QoS flow of the first service. If the QoS flow corresponding to the first service includes a plurality of QoS rules, the SMF may trigger the update procedure of the QoS flow of the first service, and further delete the QoS rule. For details, refer to an existing deletion or update procedure of the QoS flow. Details are not described herein. In addition, the UPF also completes the deletion or update procedure of the QoS flow of the first service, to delete or update the QoS flow of the first service of the UE on the UPF side. This ensures successful end-to-end deletion or update of the QoS flow.

According to the embodiment shown in FIG. 3, the UPF may trigger the creation procedure or the update procedure of the QoS flow by using the first indication information, and establish the QoS rule of the QoS flow. A signaling storm problem can be resolved by determining whether the first service meets the first condition, to ensure that the service is executed according to the configured QoS rule. This improves actual service experience.

For the foregoing Manner 2, FIG. 4 shows a specific procedure of triggering establishment or deletion of a QoS rule. A procedure of a method is specifically described by using an example in which a session management network element is an SMF, a user plane network element is a UPF, a first rule is a URR, and a second rule is a PDR. The method may include the following steps.

S401: UE sends a PDU session establishment request message to an AMF.

S402: The AMF sends a PDU session create session management context request message to the SMF.

S403: The SMF sends a request message to a PCF, where the request message is used to request a PCC rule.

For S401 to S403, refer to the descriptions of S301 to S303 in the embodiment shown in FIG. 3. Details are not described again.

S404: The PCF sends the PCC rule to the SMF, where the PCC rule includes a name of a first predefined rule.

S405: The SMF generates the PDR based on the name of the first predefined rule.

The PDR includes the name of the first predefined rule.

S406: The SMF sends an N4 session establishment request message to the UPF, where the message includes the PDR.

For S406, refer to the descriptions of Manner 2 in step 200 in the embodiment shown in FIG. 2. Details are not described again.

S407: The UPF determines the first predefined rule based on the name of the first predefined rule.

The first predefined rule includes an application identifier of a first service, a first condition, and the URR. The URR includes first indication information.

For example, the UPF may use the application identifier of the first service as a condition of service awareness, record the application identifier of the first service in a context of the PDR, start service identification, and collect statistics on service duration and a service transmission rate.

S408: The UPF sends an N4 session establishment response message to the SMF.

In addition, the N4 session establishment request message in S406 may be further replaced with an N4 session modification request message. Correspondingly, the N4 session establishment response message in S408 may be further replaced with an N4 session modification response message.

S409: The UPF determines that it is detected that the first service starts, and the first service meets the first condition.

S410: The UPF sends 5-tuple information of the first service and a URR ID to the SMF based on the first indication information.

For S409 and S410, refer to the foregoing descriptions of S308 and S309. Details are not described again.

S411: The SMF maps the URR ID to QoS information.

The SMF determines the first predefined rule stored in the SMF based on the name of the first predefined rule. The first predefined rule stored in the SMF includes the QoS information. There is an association relationship between the URR ID and the QoS information.

For specific content of the first predefined rule, refer to the descriptions of Manner 2 in step 200 in the embodiment shown in FIG. 2. Details are not described again.

S412: The SMF generates a QoS rule of a QoS flow corresponding to the first service based on the QoS information and the 5-tuple information of the first service.

S413: The UPF detects that the first service stops.

S414: The UPF sends the 5-tuple information of the first service, the URR ID, and second event information to the SMF.

S415: The SMF maps the URR ID and the 5-tuple information of the first service to the QoS rule of the QoS flow of the first service. There is a mapping relationship between the QoS rule and the URR ID, and a mapping relationship between the QoS rule and the 5-tuple information of the first service. The QoS rule herein is the QoS rule generated in S412.

S416: The SMF initiates a procedure of deleting the QoS rule.

For S412 to S416, refer to the descriptions of S311 to S315 in the embodiment shown in FIG. 3. Details are not described again.

According to the embodiment shown in FIG. 4, the first predefined rule on the UPF side may include the first indication information and the first condition. The UPF may trigger a creation procedure or an update procedure of the QoS flow by using the first indication information, and establish the QoS rule of the QoS flow. A signaling storm problem can be resolved by determining whether the first service meets the first condition, to ensure that the service is executed according to a configured QoS policy. This improves actual service experience.

For the foregoing Manner 3, FIG. 5A and FIG. 5B show a specific procedure of triggering establishment or deletion of a QoS rule in a 5G communication system. A procedure of a method is specifically described by using an example in which a session management network element is an SMF, a user plane network element is a UPF, a first rule is a URR, and a second rule is a PDR. The method may include the following steps.

S501: UE sends a PDU session establishment request message to an AMF.

S502: The AMF sends a PDU session create session management context request message to the SMF.

S503: The SMF sends a request message to a PCF, where the request message is used to request a PCC rule.

For S501 to S503, refer to the descriptions of S301 to S303 in the embodiment shown in FIG. 3. Details are not described again.

For example, the SMF sends a session management policy control create request message to the PCF through an N7 interface.

S504: The PCF sends, to the SMF, a PCC rule that carries an ADC event subscription information element.

For example, the SMF sends a session management policy control create response message to the SMF through the N7 interface, where the message includes the PCC rule that carries the ADC event subscription information element.

The PCC rule that carries the ADC event subscription information element includes a first condition and the ADC event subscription information element. The PCC rule that carries the ADC event subscription information element may further include an application identifier and/or service flow description information of a first service. The following provides descriptions by using only an example in which the PCC rule that carries the ADC event subscription information element includes the application identifier of the first service. It should be particularly noted that the PCC rule that carries the ADC event subscription information element does not include QoS information.

S505: The SMF maps the PCC rule to the PDR and the URR.

PDI in the PDR includes the application identifier and the first condition. The PDR is associated with the URR, and the PDR includes a URR ID. A measurement method or a reporting trigger in the URR includes the ADC event subscription information element.

S506: The SMF sends an N4 session establishment request message to the UPF, where the message includes the PDR and the URR.

For S506, refer to the descriptions of Manner 3 in step 200 in the embodiment shown in FIG. 2. Details are not described herein again.

S507: The UPF sends an N4 session establishment response message to the SMF.

In addition, the N4 session establishment request message in S506 may be further replaced with an N4 session modification request message. Correspondingly, the N4 session establishment response message in S507 may be further replaced with an N4 session modification response message.

For S507, refer to the descriptions of S307. Details are not described herein again.

S508: The UPF determines that it is detected that the first service starts, and the first service meets the first condition.

S509: The UPF sends 5-tuple information of the first service, the URR ID, and ADC event start information to the SMF based on the ADC event subscription information element.

There is an association relationship between an ADC event and the first service.

For example, the UPF may send an N4 session reporting request message to the SMF, where the message includes the 5-tuple information of the first service, the URR ID, and the ADC event start information.

For S509, refer to the descriptions of step 210 in the embodiment shown in FIG. 2. Details are not described herein again.

S510: The SMF determines, based on the received URR ID, that the UPF detects the ADC event.

In addition, the SMF may further send an N4 session reporting response message to the UPF.

S511: The SMF sends the 5-tuple information of the first service and the ADC event start information to the PCF.

For example, the SMF sends a session management policy control update request (Npcf_SMPolicy-Control_UpdateRequest) message to the PCF, where the message includes the 5-tuple information of the first service and the ADC event start information.

S512: The PCF determines a PCC rule corresponding to the ADC event start information based on the received 5-tuple information of the first service and the received ADC event start information. The PCC rule corresponding to the ADC event start information includes the QoS information.

The PCC rule corresponding to the ADC event start information is a PCC rule generated by the PCF based on the ADC event start information and the flow description information of the first service.

S513: The PCF sends the PCC rule corresponding to the ADC event start information to the SMF.

For example, the PCF sends a session management policy control update response (Npcf_SMPolicy-Control_UpdateRequest) message to the SMF, where the message includes the PCC rule corresponding to the ADC event start information.

S514: The SMF generates a QoS rule of a QoS flow corresponding to the first service based on the QoS information and the 5-tuple information of the first service.

Specifically, the SMF determines the QoS information based on the received PCC rule corresponding to the ADC event start information, and then generates the QoS rule of the QoS flow corresponding to the first service based on the QoS information and the 5-tuple information of the first service.

For S514, refer to the descriptions of S311. Details are not described herein again.

S515: The UPF detects that the first service stops.

For S515, refer to the descriptions of S312. Details are not described herein again.

S516: The UPF sends the 5-tuple information of the first service, the URR ID, and ADC event end information to the SMF.

For example, the UPF sends the N4 session reporting request message to the SMF, where the message carries the 5-tuple information of the first service, the URR ID, and the ADC event end information.

S517: The SMF determines, based on the received URR ID, that the UPF detects the ADC event.

In addition, the SMF may further send the N4 session reporting response message to the UPF.

S518: The SMF sends the 5-tuple information of the first service and the ADC event end information to the PCF.

For example, the SMF sends the session management policy control update request message to the PCF, where the message includes the 5-tuple information of the first service and the ADC event end information.

S519: The PCF determines a PCC rule corresponding to the ADC event end information based on the ADC event end information and the 5-tuple information of the first service, where the PCC rule corresponding to the ADC event end information is used to delete the QoS rule of the QoS flow corresponding to the first service in S514, and there is an association relationship between the QoS rule and the 5-tuple information of the first service.

The PCC rule corresponding to the ADC event end information is a PCC rule generated by the PCF based on the ADC event end information and the flow description information of the first service.

S520: The PCF sends the PCC rule corresponding to the ADC event end information to the SMF.

For example, the PCF sends the session management policy control update response message to the SMF, where the message includes the PCC rule corresponding to the ADC event end information.

S521: The SMF initiates, according to the PCC rule corresponding to the ADC event end information, a process of deleting the QoS rule.

For S521, refer to the descriptions of S315.

According to the embodiment shown in FIG. 5A and FIG. 5B, first indication information and the first condition can be indicated by reusing the existing PCC rule that carries the ADC event subscription information element. The UPF may trigger a creation procedure or an update procedure of the QoS flow by using the ADC event subscription information element, to establish the QoS rule of the QoS flow. A signaling storm problem can be resolved by determining whether the first service meets the first condition, to ensure that the service is executed according to a configured QoS policy. This improves actual service experience.

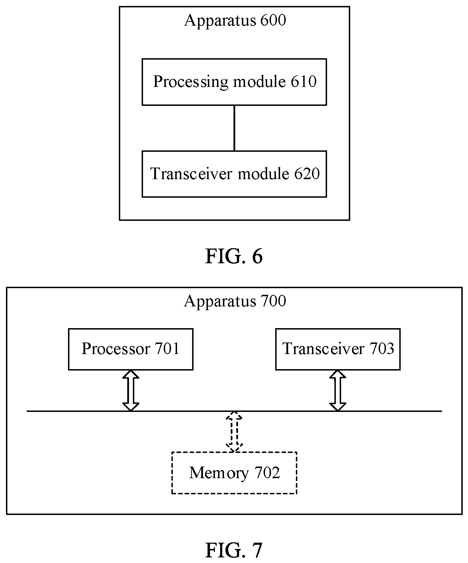

FIG. 6 is a block diagram of a possible example of a communication apparatus according to an embodiment of this application. The apparatus 600 includes a transceiver module 620 and a processing module 610. The transceiver module 620 may include a receiving unit and a sending unit. The processing module 610 is configured to control and manage an action of the apparatus 600. The transceiver module 620 is configured to support the apparatus 600 in communicating with another network entity. Optionally, the apparatus 600 may further include a storage unit. The storage unit is configured to store program code and data of the apparatus 600.

Optionally, the modules in the apparatus 600 may be implemented by software.

Optionally, the processing module 610 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in embodiments of this application. The processor may alternatively be a combination of processors implementing a computing function, for example, a combination of one or more microprocessors, or a combination of the DSP and a microprocessor. The transceiver module 620 may be a communication interface, a transceiver, a transceiver circuit, or the like. The communication interface is a general term. During specific implementation, the communication interface may include a plurality of interfaces. The storage unit may be a memory.

When the apparatus 600 is a user plane network element or a chip in the user plane network element, the processing module 610 in the apparatus 600 may support the apparatus 600 in performing actions of the user plane network element in the foregoing method examples, for example, may support the apparatus 600 in performing step 200 in FIG. 2.

The transceiver module 620 may support the apparatus 600 in communicating with a session management network element. For example, the transceiver module 620 may support the apparatus 200 in performing step 210 in FIG. 4.

For example, the processing module 610 invokes the transceiver module 620 to perform the following actions:
obtaining first indication information, where the first indication information indicates to trigger, when a first service occurs, establishment of a QoS rule of a QoS flow corresponding to the first service; and when the first service meets a first condition, sending flow description information of the first service and an identifier of a first rule to the session management network element, where the first rule corresponds to the first indication information, and the first rule is used to establish the QoS rule.

In a possible implementation, the transceiver module 620 is configured to: when obtaining the first indication information, obtain the first indication information and the first condition.

In a possible implementation, the transceiver module 620 is configured to: when obtaining the first indication information and the first condition, receive the first rule and a second rule from the session management network element. The first rule includes the first indication information. The second rule includes the first condition.

In a possible implementation, the transceiver module 620 is configured to: obtain a plurality of predefined rules; when obtaining the first indication information and the first condition, receive a second rule from the session management network element, where the second rule includes a name of a first predefined rule, the first predefined rule is one of the plurality of predefined rules, the first predefined rule includes the first rule and the first condition, and the first rule includes the first indication information; and determine the first predefined rule in the plurality of predefined rules based on the name of the first predefined rule.

In a possible implementation, the transceiver module 620 is configured to: when obtaining the first indication information and the first condition, receive the first rule and a second rule from the session management network element. The first rule includes an application detection and control event subscription information element. The application detection and control event subscription information element indicates the first indication information. The second rule includes the first condition.

In a possible implementation, the first rule is a usage reporting rule, and the second rule is a packet detection rule.

In a possible implementation, the transceiver module 620 is configured to: when the first service meets the first condition, send first event information to the session management network element. The first event information indicates that the first service starts.

In a possible implementation, the first indication information indicates to trigger, when the first service stops, deletion of the QoS rule. The transceiver module 620 is configured to: when the first service stops, send the flow description information of the first service, the identifier of the first rule, and second event information to the session management network element. The second event information indicates that the first service stops, and the flow description information of the first service and the first rule are used to determine the QoS rule.

In a possible implementation, the first condition includes that service duration is greater than or equal to a duration threshold, and/or a service transmission rate is greater than or equal to a transmission rate threshold.

In a possible implementation, the flow description information of the first service includes 5-tuple information of the first service.

In a possible implementation, the transceiver module 620 is configured to obtain first information. The first information is used to determine the first service. The first information includes an application identifier of the first service and/or the service flow description information of the first service.

It should be understood that the apparatus 600 according to this embodiment of this application may correspond to the user plane network element in the foregoing method embodiment, and operations and/or functions of the modules in the apparatus 600 are separately used to implement corresponding steps of the method performed by the user plane network element in the foregoing method embodiment. Therefore, beneficial effects in the foregoing method embodiments may also be implemented. For brevity, details are not described herein again.

When the apparatus 600 is a session management network element or a chip in the session management network element, the processing module 610 in the apparatus 600 may support the apparatus 600 in performing step 220 and step 230 in FIG. 2.

The transceiver module 620 may support the apparatus 600 in communicating with a user plane network element. For example, the transceiver module 620 may support the apparatus 600 in performing step 210 in FIG. 2.

For example, the transceiver module 620 is configured to receive flow description information of a first service and an identifier of a first rule from the user plane network element.

The processing module 610 is configured to: determine corresponding QoS information based on the identifier of the first rule; and establish a QoS rule of a QoS flow corresponding to the first service based on the QoS information and the flow description information of the first service.

In a possible implementation, the transceiver module 620 is configured to receive first event information from the user plane network element. The first event information indicates that the first service starts. When establishing the QoS rule of the QoS flow corresponding to the first service based on the QoS information and the flow description information of the first service, the processing module 610 is configured to establish the QoS rule of the QoS flow corresponding to the first service based on the QoS information, the flow description information of the first service, and the first event information.

In a possible implementation, the transceiver module 620 is configured to receive a policy and charging control rule from a policy control network element. The policy and charging control rule includes first indication information and a first condition. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold. The processing module 610 is configured to determine the first rule and a second rule according to the policy and charging control rule. The first rule includes the first indication information. The second rule includes the first condition. The transceiver module 620 is configured to send the first rule and the second rule to the user plane network element.

In a possible implementation, the transceiver module 620 is configured to: receive a name of a first predefined rule from a policy control network element; and send a second rule to the user plane network element. The second rule includes the name of the first predefined rule. The first predefined rule is one of a plurality of predefined rules obtained by the user plane network element. The first predefined rule includes the first rule and the first condition. The first rule includes first indication information. The first indication information indicates to trigger, when the first service occurs, establishment of the QoS rule of the QoS flow corresponding to the first service. The first condition includes that service duration is greater than or equal to a duration threshold, and/or a service transmission rate is greater than or equal to a transmission rate threshold.

In a possible implementation, the first rule is a usage reporting rule, and the second rule is a packet detection rule.

In a possible implementation, the first indication information indicates to trigger, when the first service stops, deletion of the QoS rule. The transceiver module 620 is configured to receive the flow description information of the first service, the identifier of the first rule, and second event information from the user plane network element. The second event information indicates that the first service stops. The processing module 610 is configured to: determine the QoS rule based on the identifier of the first rule and the flow description information of the first service; and delete the QoS rule based on the second event information.

It should be understood that the apparatus 600 according to this embodiment of this application may correspond to the session management network element in the foregoing method embodiment, and operations and/or functions of the modules in the apparatus 600 are separately used to implement corresponding steps of the method performed by the session management network element in the foregoing method embodiment. Therefore, beneficial effects in the foregoing method embodiments may also be implemented. For brevity, details are not described herein again.

FIG. 7 is a diagram of a structure of a communication apparatus 700 according to an embodiment of this application. As shown in FIG. 7, the communication apparatus 700 includes a processor 701.

When the apparatus 700 is a user plane network element or a chip in the user plane network element, in a possible implementation, the processor 701 is configured to invoke an interface to perform the following actions:
obtaining first indication information, where the first indication information indicates to trigger, when a first service occurs, establishment of a QoS rule of a QoS flow corresponding to the first service; and when the first service meets a first condition, sending flow description information of the first service and an identifier of a first rule to a session management network element, where the first rule corresponds to the first indication information, and the first rule is used to establish the QoS rule of the QoS flow corresponding to the first service.

It should be understood that the apparatus 700 may be further configured to perform other steps and/or operations on the user plane network element side in the foregoing embodiments. For brevity, details are not described herein again.

When the apparatus 700 is a session management network element or a chip in the session management network element, in a possible implementation, the processor 701 is configured to invoke an interface to perform the following actions:
receiving flow description information of a first service and an identifier of a first rule from a user plane network element; determining QoS information based on the identifier of the first rule; and establishing a QoS rule of a QoS flow corresponding to the first service based on the QoS information and the flow description information of the first service.

It should be understood that the apparatus 700 may be further configured to perform other steps and/or operations on the session management network element side in the foregoing embodiments. For brevity, details are not described herein again.

It should be understood that the processor 701 may invoke an interface to perform the foregoing receiving and sending actions. The invoked interface may be a logical interface or a physical interface. This is not limited. Optionally, the physical interface may be implemented by a transceiver. Optionally, the apparatus 700 may further include a transceiver 703.

Optionally, the apparatus 700 further includes a memory 702. The memory 702 may store program code in the foregoing method embodiments, so that the processor 701 invokes the program code.

Specifically, if the apparatus 700 includes the processor 701, the memory 702, and the transceiver 703, the processor 701, the memory 702, and the transceiver 703 communicate with each other through an internal connection path, to transmit a control signal and/or a data signal. In a possible design, the processor 701, the memory 702, and the transceiver 703 may be implemented by using a chip. The processor 701, the memory 702, and the transceiver 703 may be implemented in a same chip, or may be separately implemented in different chips, or any two functions are combined and implemented in one chip. The memory 702 may store program code, and the processor 701 invokes the program code stored in the memory 702, to implement a corresponding function of the apparatus 700.

The method disclosed in the foregoing embodiments of this application may be applied to the processor, or may be implemented by the processor. The processor may be an integrated circuit chip and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly, or may be a system on chip (system on chip, SoC), or may be a central processing unit (central processing unit, CPU), or may be a network processor (network processor, NP), or may be a digital signal processing circuit (digital signal processor, DSP), or may be a micro controller (micro controller unit, MCU), or may be a programmable logic device (programmable logic device, PLD) or another integrated chip. The processor may implement or perform the methods, the steps, and the logical block diagrams disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification is intended to include but is not limited to these memories and any memory of another proper type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, another optical disc storage a disk storage medium, another magnetic storage device, or any other medium that can carry or store expected program code in a form of an instruction structure or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, and is configured to support a computer apparatus in implementing functions related to devices in the foregoing embodiments. In a possible implementation, the chip system further includes a memory. The memory is configured to store a program and data that are necessary for the computer apparatus. The chip system may include a chip, or may include a chip and another discrete component.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numerical numbers or sequence numbers involved in the foregoing processes are merely distinguished for ease of description, and should not constitute any limitation on the implementation processes of embodiments of this application.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside of the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory ROM, a random access memory RAM, a magnetic disk, or an optical disc.

## Claims

1. A method for establishing a quality of service QoS rule, wherein the method comprises:
obtaining, by a user plane network element, first indication information, wherein the first indication information indicates to trigger, when a first service occurs, establishment of a QoS rule of a QoS flow corresponding to the first service; and
when the first service meets a first condition, sending, by the user plane network element, flow description information of the first service and an identifier of a first rule to a session management network element, wherein the first rule corresponds to the first indication information, and the first rule is used to establish the QoS rule.

2. The method according to claim 1, wherein the obtaining, by a user plane network element, first indication information comprises:
obtaining, by the user plane network element, the first indication information and the first condition.

3. The method according to claim 2, wherein the obtaining, by the user plane network element, the first indication information and the first condition comprises:
receiving, by the user plane network element, the first rule and a second rule from the session management network element, wherein the first rule comprises the first indication information, and the second rule comprises the first condition.

4. The method according to claim 2, further comprising:
obtaining, by the user plane network element, a plurality of predefined rules, wherein
the obtaining, by the user plane network element, the first indication information and the first condition comprises:
receiving, by the user plane network element, a second rule from the session management network element, wherein the second rule comprises a name of a first predefined rule, the first predefined rule is one of the plurality of predefined rules, the first predefined rule comprises the first rule and the first condition, and the first rule comprises the first indication information; and
determining, by the user plane network element, the first predefined rule from the plurality of predefined rules based on the name of the first predefined rule.

5. The method according to claim 2, wherein the obtaining, by the user plane network element, the first indication information and the first condition comprises:
receiving, by the user plane network element, the first rule and a second rule from the session management network element, wherein the first rule comprises an application detection and control event subscription information element, the application detection and control event subscription information element indicates the first indication information, and the second rule comprises the first condition.

6. The method according to any one of claims 3 to 5, wherein the first rule is a usage reporting rule, and the second rule is a packet detection rule.

7. The method according to any one of claims 1 to 6, further comprising:
when the first service meets the first condition, sending, by the user plane network element, first event information to the session management network element, wherein the first event information indicates that the first service starts.

8. The method according to any one of claims 1 to 7, wherein the first indication information indicates to trigger, when the first service stops, deletion of the QoS rule; and
the method further comprises:
when the first service stops, sending, by the user plane network element, the flow description information of the first service, the identifier of the first rule, and second event information to the session management network element, wherein the second event information indicates that the first service stops, and the flow description information of the first service and the first rule are used to determine the QoS rule.

9. The method according to any one of claims 1 to 8, wherein the first condition comprises that service duration is greater than or equal to a duration threshold, and/or a service transmission rate is greater than or equal to a transmission rate threshold.

10. The method according to any one of claims 1 to 9, wherein the flow description information of the first service comprises 5-tuple information of the first service.

11. The method according to any one of claims 1 to 10, further comprising:
further obtaining, by the user plane network element, first information, wherein the first information is used to determine the first service, and the first information comprises an application identifier of the first service and/or the service flow description information of the first service.

12. A method for establishing a quality of service QoS rule, wherein the method comprises:
receiving, by a session management network element, flow description information of a first service and an identifier of a first rule from a user plane network element;
determining, by the session management network element, corresponding QoS information based on the identifier of the first rule; and
establishing, by the session management network element, a QoS rule of a QoS flow corresponding to the first service based on the QoS information and the flow description information of the first service.

13. The method according to claim 12, further comprising:
receiving, by the session management network element, first event information from the user plane network element, wherein the first event information indicates that the first service starts, wherein
the establishing, by the session management network element, a QoS rule of a QoS flow corresponding to the first service based on the QoS information and the flow description information of the first service comprises:
establishing, by the session management network element, the QoS rule of the QoS flow corresponding to the first service based on the QoS information, the flow description information of the first service, and the first event information.

14. The method according to claim 12 or 13, further comprising:
receiving, by the session management network element, a policy and charging control rule from a policy control network element, wherein the policy and charging control rule comprises first indication information and a first condition, the first indication information indicates to trigger, when the first service occurs, establishment of the QoS rule of the QoS flow corresponding to the first service, and the first condition comprises that service duration is greater than or equal to a duration threshold, and/or a service transmission rate is greater than or equal to a transmission rate threshold;
determining, by the session management network element, the first rule and a second rule according to the policy and charging control rule, wherein the first rule comprises the first indication information, and the second rule comprises the first condition; and
sending, by the session management network element, the first rule and the second rule to the user plane network element.

15. The method according to claim 12 or 13, further comprising:
receiving, by the session management network element, a name of a first predefined rule from a policy control network element; and
sending, by the session management network element, a second rule to the user plane network element, wherein the second rule comprises the name of the first predefined rule, the first predefined rule is one of a plurality of predefined rules obtained by the user plane network element, the first predefined rule comprises the first rule and a first condition, the first rule comprises first indication information, the first indication information indicates to trigger, when the first service occurs, establishment of the QoS rule of the QoS flow corresponding to the first service, and the first condition comprises that service duration is greater than or equal to a duration threshold, and/or a service transmission rate is greater than or equal to a transmission rate threshold.

16. The method according to claim 14 or 15, wherein the first rule is a usage reporting rule, and the second rule is a packet detection rule.

17. The method according to claim 14 or 15, wherein the first indication information indicates to trigger, when the first service stops, deletion of the QoS rule; and
the method further comprises:
receiving, by the session management network element, the flow description information of the first service, the identifier of the first rule, and second event information from the user plane network element, wherein the second event information indicates that the first service stops;
determining, by the session management network element, the QoS rule based on the identifier of the first rule and the flow description information of the first service; and
deleting, by the session management network element, the QoS rule based on the second event information.

18. A communication apparatus, wherein the communication apparatus is configured to perform the method according to any one of claims 1 to 11 or the method according to any one of claims 12 to 17.

19. A chip, wherein the chip is coupled to a memory, and the chip reads a computer program stored in the memory, to perform the method according to any one of claims 1 to 11, or the method according to any one of claims 12 to 17.

20. A computer-readable storage medium, wherein the storage medium stores a computer program or instructions, and when the computer program or the instructions are executed by a communication apparatus, the method according to any one of claims 1 to 11, or the method according to any one of claims 12 to 17 is implemented.

21. A communication system, wherein the system comprises a session management network element and a user plane network element, the user plane network element performs the method according to any one of claims 1 to 11, and the session management network element performs the method according to any one of claims 12 to 17.

22. A computer program product, wherein the computer program product comprises a computer program, and when the computer program is run on an apparatus, the method according to any one of claims 1 to 11, or the method according to any one of claims 12 to 17 is performed.
